# EUROPÄISCHE PATENTSCHRIFT

(11) **EP 3 644 747 B1**
(45) Veröffentlichungstag und Bekanntmachung des Hinweises auf die Patenterteilung: **16.03.2022**
(21) Anmeldenummer: 18735239.8
(22) Anmeldetag: 25.06.2018
(51) Int. Cl.: A21B 3/13, A21B 3/15

(54) **BACKVERBUNDFOLIE, VERFAHREN ZU DEREN HERSTELLUNG SOWIE VERWENDUNG DERSELBEN**
BAKING COMPOSITE FILM, METHOD FOR PRODUCING SAME AND USE OF SAME
FILM COMPOSITE DE CUISSON, PROCÉDÉ DE FABRICATION DE CE DERNIER ET UTILISATION DE CE DERNIER

(30) Priorität: 30.06.2017 DE 102017114718; 01.02.2018 DE 102018102267
(43) Veröffentlichungstag der Anmeldung: 06.05.2020
(73) Patentinhaber: Speira GmbH, 41515 Grevenbroich (DE)
(72) Erfinder: HEISTER, Guido, 41515 Grevenbroich (DE); WECKOPP, Martina, 47608 Geldern (DE); SCHENKEL, Marco, 41517 Grevenbroich (DE)
(74) Vertreter: Cohausz & Florack
(86) Internationale Anmeldenummer: PCT/EP2018/066849
(87) Internationale Veröffentlichungsnummer: WO 2019/002156

(56) Entgegenhaltungen:
- EP-A1- 0 392 227
- DE-A1- 3 025 373
- US-A- 2 242 684
- US-A- 2 407 118
- US-A- 3 033 101
- US-A1- 2005 013 951
- US-A1- 2005 244 599
- US-A1- 2011 031 375
- US-A1- 2016 157 671

## Beschreibung

Die Erfindung betrifft eine Backverbundfolie, ein Verfahren zur Herstellung einer Backverbundfolie sowie eine Verwendung der Backverbundfolie.

Um während eines Backvorgangs in einem Backofen das Anbacken von Backgut an einem Backblech zu verhindern, wird typischerweise Backpapier eingesetzt, das vor dem Backvorgang als Backgutunterlage zwischen dem Backblech und dem Backgut angeordnet wird.

Bei Backpapier handelt es sich um hitzebeständiges und typischerweise beschichtetes Papier, das normalerweise aus gemahlenen Cellulosefasern hergestellt wird. Heutzutage verwendetes Backpapier ist typischerweise mit Silikonlack beschichtet, um das Anbacken des Backguts am Backpapier zu verhindern und so das Ablösen des Backguts vom Backpapier zu erleichtern.

Bei der Verwendung von Backpapier wird häufig als Nachteil empfunden, dass Backpapiere typischerweise fett- und öldurchlässig sind, so dass aus dem Backgut austretendes oder überschüssiges Öl und Fett durch das Backpapier hindurch auf das Backblech gelangt, welches dann nach dem Backvorgang gereinigt werden muss.

Aluminiumfolie ist im Gegensatz zu typischem Backpapier zwar Fett- und Ölundurchlässig. Allerdings bestehen gesundheitliche Bedenken beim direkten Kontakt bestimmter Nahrungsmittel mit Aluminium.

Zwar ist es möglich, auf einem Backblech zunächst ein Stück Aluminiumfolie und darüber ein Stück Backpapier anzuordnen, um den direkten Kontakt zwischen Aluminium und Backgut zu vermeiden. Diese Vorgehensweise ist jedoch relativ umständlich.

Aus der US 2005/0013951 A1 ist ein Verpackungsmaterial für eine Lebensmittelverpackung bekannt, das einen Aluminiumfolienbogen, einen Papierbogen und einen diese verbindenden Kleber umfasst.

Vor diesem Hintergrund liegt der vorliegenden Erfindung die Aufgabe zugrunde, ein Produkt, ein Verfahren zu dessen Herstellung sowie dessen Verwendung zur Verfügung zu stellen, mit dem sich die oben genannten Probleme beheben lassen.

Diese Aufgabe wird erfindungsgemäß gelöst durch eine Backverbundfolie mit einer Aluminiumfolienlage und mit einer Backpapierlage, wobei die Aluminiumfolienlage und die Backpapierlage durch eine dazwischen angeordnete Kleberlage miteinander verklebt sind. Auf diese Weise wird eine Verbundfolie bereitgestellt, die die Vorteile der Lebensmittelverträglichkeit der Backpapierlage mit der Öl- und Fettundurchlässigkeit der Aluminiumfolienlage miteinander verbindet. Darüber hinaus lässt sich die Backverbundfolie vom Anwender einfach verarbeiten.

Durch das Verkleben der Aluminiumfolienlage und der Backpapierlage wird einerseits erreicht, dass die Backverbundfolie die gute Formbarkeit, Stabilität und Reißbeständigkeit der Aluminiumfolienlage aufweist. Andererseits wird erreicht, dass die Neigung der Aluminiumfolienlage, bei einmal erfolgter Rissbildung immer weiter zu reißen, durch die damit verklebte Backpapierlage reduziert wird.

Weiterhin wird die oben genannte Aufgabe erfindungsgemäß gelöst durch ein Verfahren zur Herstellung einer Backverbundfolie, bei dem eine Aluminiumfolienlage und eine Backpapierlage bereitgestellt werden, bei dem auf die Aluminiumfolienlage und/oder auf die Backpapierlage eine Kleberlage aufgebracht wird und bei dem die Aluminiumfolienlage und die Backpapierlage mit dazwischen angeordneter Kleberlage zu einer Verbundfolie aufeinander gelegt werden. Mit diesem Verfahren lässt sich insbesondere die zuvor beschriebene Backverbundfolie herstellen.

Die Backpapierlage und die Aluminiumfolienlage werden vorzugsweise bandförmig bereitgestellt, so dass eine kontinuierliche Produktion zu einem Backverbundfolienband möglich ist.

Schließlich wird die oben genannte Aufgabe gelöst durch die Verwendung der zuvor beschriebenen Backverbundfolie als Backgutunterlage bei einem Backvorgang.

Nachfolgend werden verschiedene Ausführungsformen der Backverbundfolie, des Verfahrens und der Verwendung beschrieben, wobei die einzelnen Ausführungsformen jeweils einzeln sowohl für die Backverbundfolie, das Verfahren und für die Verwendung gelten. Darüber hinaus können die beschriebenen Ausführungsformen auch untereinander kombiniert werden.

Bei einer ersten Ausführungsform ist die Backpapierlage silikonfrei. Insbesondere ist bei dieser Ausführungsform auch die Trennschicht silikonfrei.

Backpapier ist häufig mit Silikonlack beschichtet, um nach dem Backen das Ablösen des Backguts zu erleichtern. Die hohen Temperaturen im Backofen von z.B. 220°C können bei silikonisiertem Backpapier dazu führen, dass der Silikonlack teilweise verdampft. Neben den damit verbundenen gesundheitlichen Bedenken wurde bei modernen mit Sensoren ausgerüsteten Backöfen darüber hinaus als Problem erkannt, dass sich der verdampfende Silikonlack auf den Sensoren niederschlagen bzw. die Sensoren zusetzen kann, so dass die Sensoren in ihrer Funktionsweise beeinträchtigt werden.

Durch die gezielte Verwendung einer silikonfreien Backpapierlage wird mit der beschriebenen Ausführungsform ein Produkt zur Verfügung gestellt, dass auch in modernen, mit Sensoren versehenen Backöfen ohne weiteres eingesetzt werden kann.

Vorzugsweise ist die Backverbundfolie silikonfrei. Insbesondere sind die einzelnen Bestandteile der Backverbundfolie vorzugsweise silikonfrei. Für die Backpapierlage wird vorzugsweise entsprechend der zuvor beschriebenen Ausführungsform eine silikonfreie Backpapierlage verwendet, insbesondere eine Backpapierlage ohne Silikonschicht. Weiterhin wird für die Kleberlage vorzugsweise ein silikonfreier Kleber verwendet. Auf die Backpapierlage ist eine Trennlage aufgebracht, die auch vorzugsweise silikonfrei ist. Auf diese Weise wird eine insgesamt silikonfreie Backverbundfolie zur Verfügung gestellt, die insbesondere für moderne, mit Sensoren ausgestattete Backöfen gut geeignet ist.

Bei der erfindungsgemäßen Backverbundfolie ist an der der Aluminiumfolienlage abgewandten Seite der Backpapierlage eine Trennschicht aus Trennwachs vorgesehen. Bei dem entsprechenden erfindungsgemäßen Verfahren wird die der Aluminiumfolienlage abgewandte Seite der Backpapierlage mit Trennwachs beschichtet, so dass sich auf der der Aluminiumfolienlage abgewandten Seite der Backpapierlage eine Trennschicht aus Trennwachs bildet. Das Beschichten der Backpapierlage mit Trennwachs erfolgt vorzugsweise nach dem Zusammenlegen von Aluminiumfolienlage und Backpapierlage mit dazwischen angeordneter Kleberlage zu einer Verbundfolie.

Durch das Vorsehen einer solchen Trennschicht aus Trennwachs wird zum einen erreicht, dass sich Backgut nach dem Backen besser von der Backverbundfolie lösen lässt, und zwar auch bei Verzicht auf eine Beschichtung der Backpapierlage mit Silikonlack. Gleichzeitig hat eine Beschichtung mit Trennwachs den Vorteil gegenüber anderen Beschichtungen, dass es weder die Funktionsfähigkeit von Sensoren in einem Backofen beeinträchtigt, noch sich negativ auf den Geschmack oder Geruch des Backguts auswirkt.

Indem die Trennschicht bei dem Verfahren auf der der Aluminiumfolienlage gegenüberliegenden Seite auf die Backpapierlage aufgebracht wird, kann trotz eines öl- bzw. fetthaltigen Trennwachses eine gute Klebeverbindung zwischen Aluminiumfolienlage und Backpapierlage erreicht werden. Die Verwendung von mit Trennwachs durchtränktem Papier, sogenanntem Ölpapier, würde demgegenüber zu einer schlechteren Haftung zwischen Aluminiumfolienlage und Backpapierlage führen.

Bei einer weiteren Ausführungsform umfasst die Trennschicht aus Trennwachs bzw. das zu deren Herstellung verwendete Trennwachs folgende Bestandteile: pflanzliche Öle und/oder Fette, Wachsester und ggf. Zusatzstoffe. Vorzugsweise besteht das Trennwachs im Wesentlichen, insbesondere zu mindestens 95 Gew.-% aus diesen Bestandteilen.

Bei den pflanzlichen Ölen und Fetten handelt es sich vorzugsweise um Palmöle und/oder Kokosöle bzw. Palmfette und/oder Kokosfette. Bei den Wachsestern handelt es sich vorzugsweise um Ester von Palmölsäuren, wie zum Beispiel Ölsäureester, Palmitinsäureester oder Linolsäureester, und/oder um Ester von Kokosöl-Säuren, wie zum Beispiel Laurinsäureester, Myristinsäureester, Palmitinsäureester, Ölsäureester oder Linolsäureester. Insbesondere kann es sich bei den Wachsestern auch um Ester von Säuren des Palmkernöls handeln.

Entsprechend wird bei einer Ausführungsform vorzugsweise ein Trennwachs aus Kokosöl, Palmöl und/oder Palmkernöl, Estern von Säuren dieser Öle sowie ggf. Zusatzstoffen verwendet.

Als Zusatzstoffe kommen insbesondere Emulgatoren und/oder Antioxidationsmittel in Betracht, insbesondere Fettsäureester der Ascorbinsäure oder Tocopherole (z.B. in Form von stark tocopherolhaltigen Extrakten).

In Backtests wurde festgestellt, dass mit der zuvor beschriebenen Zusammensetzung der Trennschicht eine Backverbundfolie hergestellt werden kann, von der sich Backgut nach dem Backen in zufriedenstellender Weise lösen lässt und die zu keinen Geschmacks- oder Geruchseinbußen am Backgut führte.

Bei einer weiteren Ausführungsform ist die Backpapierlage fettabweisend. Zu diesem Zweck kann die Backpapierlage insbesondere einen Zusatzstoff wie zum Beispiel Polyvinylalkohole aufweisen. Insbesondere kann die Backpapierlage durch ein Verfahren hergestellt sein, bei dem eine Pulpe mit gemahlenen Zellulosefasern mit einem die fettabweisende Eigenschaft des herzustellenden Backpapiers bewirkenden Zusatzstoff, wie zum Beispiel Polyvinylalkohole, versehen wird und bei dem das Backpapier aus der Pulpe gewonnen wird. Auf diese Weise wird eine gleichmäßige Verteilung des Zusatzstoffs im Backpapier erreicht, so dass dieses gleichmäßig fettabweisende Eigenschaften aufweist.

Durch die fettabweisende Eigenschaft der Backpapierlage wird insbesondere erreicht, dass ein auf die Backpapierlage aufgebrachtes Trennwachs eine gleichmäßige dünne Trennschicht ausbildet, ohne dass die Backpapierlage das Trennwachs aufsaugt.

Bei einer weiteren Ausführungsform ist die Backpapierlage nassfest. Zu diesem Zweck kann die Backpapierlage insbesondere einen Zusatzstoff wie zum Beispiel Polyalkylenamine aufweisen. Auf diese Weise kann ein unerwünschtes Zerreißen der Backpapierlage bei wässrigem Backgut verhindert werden.

Bei einer weiteren Ausführungsform besteht die Klebelage aus einem hitzebeständigen Kleber. Vorzugsweise ist der Kleber mindestens bis 220 °C hitzebeständig, so dass sich die Aluminiumfolienlage und die Backpapierlage während eines Backvorgangs nicht voneinander lösen. Vorzugsweise wird ein wasserbasierter Kleber verwendet, insbesondere ein wasserbasierter Emulsionsklebstoff. Als besonders vorteilhaft für die Lebensmitteltauglichkeit der Backverbundfolie hat sich ein Casein/Latex-Emulsionsklebstoff herausgestellt.

Bei einer weiteren Ausführungsform weist die Backpapierlage eine Grammatur (Flächengewicht) im Bereich von 25 bis 100 g/m² auf.

Bei einer weiteren Ausführungsform besteht die Aluminiumfolienlage aus einer Aluminiumlegierung vom Typ EN AW 12xx, insbesondere EN AW 1200, oder vom Typ EN AW 8079. Die Dicke der Aluminiumfolienlage liegt vorzugsweise im Bereich von 6 bis 120 µm, insbesondere im Bereich 9 bis 12 µm. Dies führt zu besonders geeigneten mechanischen Eigenschaften für die Backverbundfolie. Weiterhin wird vorzugsweise eine Aluminiumfolienlage im weichgeglühten Zustand (Zustand 0 nach EN 515) verwendet, wodurch die Verarbeitbarkeit der Backverbundfolie verbessert wird.

Bei einer weiteren Ausführungsform werden die Aluminiumfolienlage und die Backpapierlage mit der dazwischen angeordneten Kleberlage aneinandergepresst. Vorzugsweise werden die Aluminiumfolienlage und die Backpapierlage mit der dazwischen angeordneten Kleberlage durch zwei gegenüberliegende Anpresswalzen geführt. Auf diese Weise haften die Aluminiumfolienlage und die Backpapierlage durch die Kleberlage zuverlässig und flächig, insbesondere vollflächig, aufeinander.

Bei einer weiteren Ausführungsform des Verfahrens wird die Verbundfolie getrocknet, beispielsweise in einem Durchlaufofen. Vorzugsweise erfolgt das Trocknen nach einem vorherigen Aneinanderpressen von Aluminiumfolienlage, Backpapierlage und dazwischen angeordnetem Kleber.

Eine Beschichtung der Backpapierlage mit Trennwachs erfolgt vorzugsweise nach einem etwaigen Aneinanderpressen von Aluminiumfolienlage, Backpapierlage und dazwischen angeordneter Kleberlage. Auf diese Weise wird durch das Aneinanderpressen zunächst ein guter Zusammenhalt von Aluminiumfolienlage und Backpapierlage durch die Kleberlage erreicht, bevor das Trennwachs aufgebracht wird. Ein etwaiger negativer Einfluss des Trennwachses, beispielsweise von darin enthaltenen Ölen bzw. Fetten, auf die Klebeverbindung durch die Kleberlage wird dadurch reduziert oder sogar verhindert.

Weiterhin erfolgt eine Beschichtung der Backpapierlage mit Trennwachs vorzugsweise vor einem etwaigen Trocknen der Verbundfolie. Auf diese Weise kann beim Trocknen auch die Trennschicht aus Trennwachs getrocknet werden, so dass ggf. Wasseranteile im Trennwachs verdampfen können.

Die fertige Backverbundfolie kann schließlich, zum Beispiel nach dem Trocknen, zu einer Rolle aufgewickelt werden.

Weitere Vorteile und Merkmale der Backverbundfolie, des Verfahrens und der Verwendung ergeben sich aus der nachfolgenden Beschreibung von Ausführungsbeispielen, wobei auf die beigefügte Zeichnung Bezug genommen wird.

In der Zeichnung zeigen:
- Fig. 1: ein Ausführungsbeispiel der Backverbundfolie,
- Fig. 2: ein Ausführungsbeispiel des Verfahrens und
- Fig. 3: ein Ausführungsbeispiel der Verwendung.

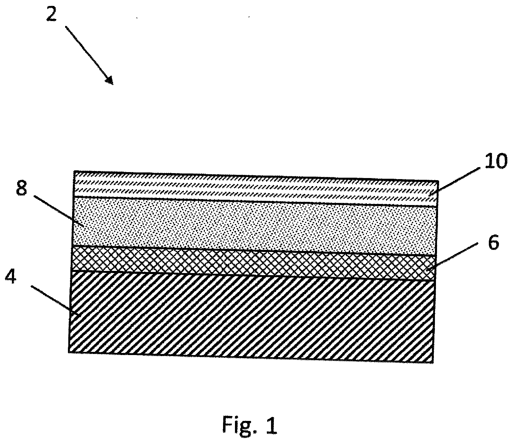

Figur 1 zeigt den Lagenaufbau eines Ausführungsbeispiels der Backverbundfolie in schematischer Querschnittsansicht. Die Backverbundfolie 2 umfasst eine Aluminiumfolienlage 4, eine darauf aufgebracht Kleberlage 6, eine wiederum darauf aufgebrachte Backpapierlage 8 sowie eine wiederum darauf aufgebrachte Trennschicht 10 aus Trennwachs. Die Aluminiumfolienlage 4 besteht aus einer Aluminiumlegierung vom Typ EN AW 1200, weist eine Dicke von 12 µm auf und befindet sich im weichgeglühten Zustand. Die Kleberlage 6 besteht aus einem Casein-Latex-Emulsionsklebstoff. Die Backpapierlage 8 besteht im Wesentlichen aus gemahlenen Zellulosefasern sowie Zusatzstoffen, wie zum Beispiel Polyvinylalkoholen und Polyalkylenaminen, die die Backpapierlage 8 fettabweisend bzw. nassfest machen. Die Backpapierlage 8 ist silikonfrei und weist insbesondere keine silikonhaltige Beschichtung auf. Die Trennschicht 10 besteht aus einem Trennwachs aus einer Mischung von Kokos- und Palmöl bzw. Palmkernöl sowie deren Estern.

Weiterhin weist das Trennwachs der Trennschicht 10 Zusatzstoffe, nämlich Ascorbinsäureester und Tocopherol, als Emulgatoren und Antioxidationsmittel auf. Die Trennschicht 10 ist wie die Backpapierlage 8 silikonfrei.

Durch diesen Aufbau der Backverbundfolie 2 wird ein Produkt zur Verfügung gestellt, dass sich einerseits einfach verarbeiten lässt, aufgrund des Verzichts auf Silikon gesundheitsunbedenklich ist und auch in modernen Backöfen mit Sensoren im Backraum eingesetzt werden kann und schließlich ein zufriedenstellendes Ablösen des Backguts nach einem Backvorgang erlaubt.

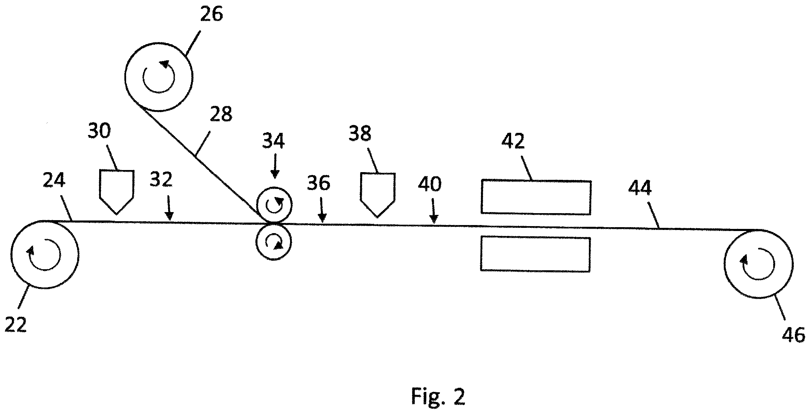

Figur 2 zeigt in schematischer Darstellung ein Ausführungsbeispiel eines Verfahrens zur Herstellung einer Backverbundfolie, insbesondere der Backverbundfolie 2 aus Figur 1, in Bandform. Bei dem Verfahren werden zunächst eine Rolle 22 mit Aluminiumfolie 24 (EN AW 1200, 12 µm Dicke, weichgeglüht) sowie eine Rolle 26 mit einer silikonfreien Backpapierlage 28 bereitgestellt. Auf die Aluminiumfolienlage 24 wird mittels einer Auftragseinheit 30 eine Kleberlage 32, insbesondere aus einem Casein/Latex-Emulsionskleber, aufgebracht. Mittels Anpressrollen 34 werden die Aluminiumfolienlage 24, die Backpapierlage 28 und die dazwischen angeordnete Kleberlage 32 zu einer Verbundfolie 36 aufeinander gelegt und aneinandergepresst. Nach dem Zusammenpressen wird die der Aluminiumfolienlage 24 abgewandte Seite der Backpapierlage 28 mittels einer weiteren Auftragseinheit 38 mit einer Trennschicht 40 aus Trennwachs beschichtet. Anschließend wird die Verbundfolie 36 zum Trocknen durch einen Durchlaufofen 42 gefahren, wobei einerseits die die Aluminiumfolienlage 24 und die Backpapierlage 28 verbindende Kleberlage 32 aushärtet und ein etwaiger Wasseranteil in der Trennschicht 40 verdampft. Die fertige Backverbundfolie 44 wird dann zu einer Rolle 46 aufgewickelt.

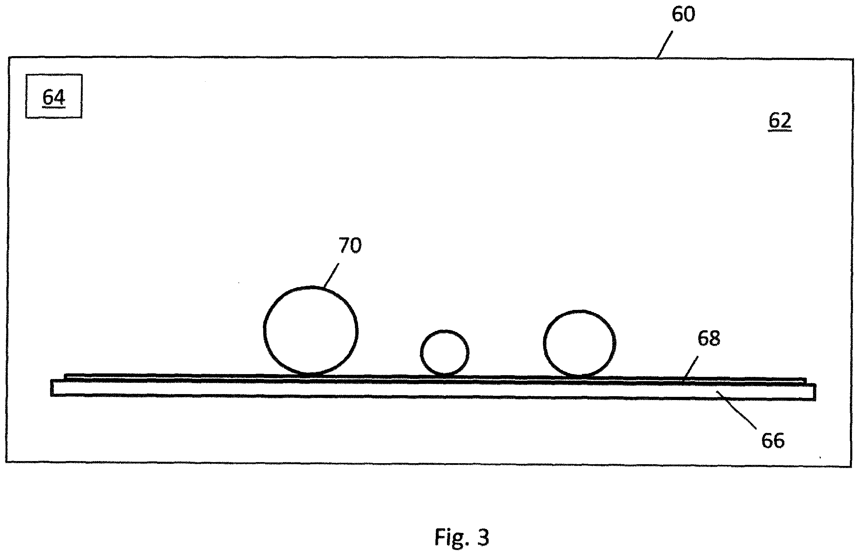

Figur 3 zeigt in schematischer Darstellung ein Ausführungsbeispiel einer Verwendung der Backverbundfolie 2 aus Figur 1. Figur 3 zeigt einen Backofen 60 mit einem beheizbaren Backraum 62, in dem ein Sensor 64 angeordnet ist, wie zum Beispiel bei Backöfen der Marke Siemens von der BSH Gruppe, die mit der Funktion "cookControl" ausgestattet sind.

Zur Durchführung eines Backvorgangs wird in den Backraum 62 ein Backblech 66 eingesetzt, auf dem ein Bogen 68 aus der Backverbundfolie 2 aus Fig. 1 gelegt ist. Die Aluminiumfolienlage 4 des Bogens 68 ist zum Backblech 66 gerichtet. Backgut 70 wird sodann auf dem Bogen 68 aus Backverbundfolie 2 angeordnet, so dass das Backgut mit der Trennschicht 10 des Bogens 68 in Kontakt steht.

Während des Backvorgangs wird der Backraum 62 auf eine Temperatur von beispielsweise 220 °C aufgeheizt. Durch diese Temperaturen kann es zwar zu einem teilweisen Aufschmelzen der Trennschicht 10 und ggf. auch zu einem partiellen Verdampfen des Trennwachses kommen. Anders als bei silikonbeschichtetem Backpapier führt dies jedoch nicht zu einer Beeinträchtigung oder Beschädigung des Sensors 64.

Weiterhin hat sich gezeigt, dass sich das Backgut 70 nach dem Backvorgang dank der Trennschicht 10 des Bogens 68 trotz fehlender Silikonlackschicht in zufriedenstellender Weise vom Bogen 68 aus Backverbundfolie ablösen lässt.

Es wurden Versuche durchgeführt, die die Vorteile der zuvor beschriebenen Backverbundfolien zeigen. Diese werden im Folgenden erläutert:
Zunächst wurden verschiedene Backverbundfolien hergestellt, indem jeweils auf weichgeglühte, 12 µm dicke Aluminiumfolie aus einer Aluminiumlegierung vom Typ EN AW 1200 eine Kleberschicht aus Casein/Latex-Emulsionskleber aufgebracht und dann jeweils ein Backpapier aufgelegt wurde. Die sich dadurch ergebende Verbundfolie wurde zunächst durch Anpressrollen geführt, um die Aluminiumfolie, das Backpapier und die dazwischen liegende Kleberschicht aneinander zu pressen, dann bei einigen Versuchen auf der Backpapier-Seite beschichtet und schließlich in einem Durchlaufofen getrocknet. Aus den fertigen Backverbundfolien wurden dann einzelne Bögen ausgeschnitten.

Die Aluminiumfolienlage und die Kleberlage waren bei allen Backverbundfolien identisch. Der weitere Aufbau der Backverbundfolien ist der nachfolgenden Tabelle 1 zu entnehmen.

Die erste Spalte der Tabelle 1 gibt die Bezeichnung der jeweiligen Backverbundfolie für die Versuche an (A - J). Die zweite und dritte Spalte geben das für die Backpapierlage verwendete Backpapier an. Um ein aussagekräftiges Ergebnis zu erreichen, wurden am Markt verfügbare Backpapiere von verschiedenen Herstellern getestet (in Tabelle 1 als Hersteller 1-4 bezeichnet). Das Backpapier des Herstellers 2 ist sowohl silikonisiert (d.h. mit Silikonlackbeschichtung) als auch silikonfrei erhältlich. Die dritte Spalte gibt an, ob für die jeweilige Backverbundfolie ein silikonisiertes oder ein silikonfreies Backpapier verwendet wurde. Die letzte Spalte gibt an, ob eine Trennschicht aufgebracht wurde und welches Material hierfür verwendet wurde. Bei den Backverbundfolien F bis H wurde für die Trennschicht jeweils ein für Lebensmittel zugelassenes Trennwachs aus Palmöl, Kokosnussöl, Wachsestern von Palmkernsäuren und Kokosnussölsäuren sowie als Zusatzstoffe Fettsäureestern der Ascorbinsäure und stark tocopherolhaltigen Extrakten verwendet. Bei den Backverbundfolien I und J wurde für die Trennschicht jeweils eine für Lebensmittel zugelassene wasserbasierte Acrylatdispersion verwendet.

**Tabelle 1**

| | **Backpapierlage** | **silikonisiert** | **Trennschicht** |
|---|---|---|---|
| A | Backpapier Hersteller 1 | ja | nein |
| B | Backpapier Hersteller 2 | ja | nein |
| C | Backpapier Hersteller 2 | nein | nein |
| D | Backpapier Hersteller 3 | nein | nein |
| E | Backpapier Hersteller 4 | nein | nein |
| F | Backpapier Hersteller 2 | nein | Trennwachs |
| G | Backpapier Hersteller 3 | nein | Trennwachs |
| H | Backpapier Hersteller 4 | nein | Trennwachs |
| I | Backpapier Hersteller 2 | nein | Acrylatlack |
| J | Backpapier Hersteller 3 | nein | Acrylatlack |

Mit den Bögen aus Backverbundfolie vom Typ A - J wurden jeweils verschiedene Backvorgänge mit unterschiedlichem Backgut durchgeführt, und zwar jeweils mit Backbrötchen, Croissants und Laugenbrezeln. Zu diesem Zweck wurde jeweils ein Backverbundfolien-Bogen auf einem konventionellen Backblech angeordnet, das jeweilige Backgut auf den Backverbundfolien-Bogen gegeben und der Backvorgang in einem konventionellen Backofen entsprechend der Angaben des Herstellers des jeweiligen Backguts durchgeführt (insb. mit der vorgegebenen Backzeit und der vorgegebenen Backtemperatur). Nach dem jeweiligen Backvorgang wurden die Geruchsentwicklung im Backofen sowie die Ablösbarkeit des fertig gebackenen Backguts vom jeweiligen Backverbundfolien-Bogen überprüft.

Die Ergebnisse der Backversuche sind in der nachfolgenden Tabelle 2 zusammengefasst:

**Tabelle 2**

| **Backverbundfolie** | **Eignung für sensorgestützte Backöfen¹** | **Ablösbarkeit des Backguts²** | | | **Geruchsentwicklung⁶** |
|---|---|---|---|---|---|
| | | **B³** | **C⁴** | **L⁵** | |
| A | nein | ++ | ++ | ++ | + |
| B | nein | ++ | ++ | ++ | + |
| C | ja | ++ | ∘ | - | + |
| D | ja | ++ | ++ | - | + |
| E | ja | ++ | - | - | + |
| F | ja | ++ | + | - | + |
| G | ja | ++ | ++ | + | + |
| H | ja | ++ | + | - | + |
| I | ja | ++ | ∘ | - | - |
| J | ja | ++ | ∘ | - | - |
| ¹keine Eignung für sensorgestützte Backöfen bei silikonisierten Backpapierfolien | | | | | |
| ²++: keine Anhaftungen, +: leichte Anhaftungen, o: mittlere Anhaftungen, | | | | | |
| -: starke Anhaftungen | | | | | |
| ³B: Backbrötchen, ⁴C: Croissants, ⁵L: Laugenbrezel | | | | | |
| ⁶+: kein störender Geruch nach dem Backvorgang; -: störende Geruchsentwicklung | | | | | |

Die Versuche zeigen, dass die Backverbundfolien A und B mit silikonisierten Backpapierlagen (Hersteller 1, 2) wie erwartet gute Ergebnisse bei der Ablösbarkeit des Backguts zeigen. Allerdings sind silikonisierte Backpapierlagen für moderne sensorgestützte Backöfen nicht gut geeignet, da die beim Backvorgang verdampfenden Silikone die Sensoren dieser Backöfen beeinträchtigen oder beschädigen können.

Die Backverbundfolien C bis E mit silikonfreien Backpapierlagen verschiedener Hersteller (2, 3, 4) ohne Trennschicht zeigen für Backbrötchen sehr gute, für Croissants unterschiedliche und für Laugenbrezel weniger gute Ergebnisse. Diese Backverbundfolien sind damit zumindest bedingt als Backgutunterlage geeignet, wenn auch nicht für alle Backgute.

Die Backverbundfolien F bis H mit silikonfreien Backpapierlagen verschiedener Hersteller (2, 3, 4) mit Trennwachs-Trennschicht zeigen im direkten Vergleich zu den entsprechenden Backverbundfolien C bis E ohne Trennwachs-Trennschicht verbesserte Ergebnisse beim Ablösen des Backguts. So zeigt Backverbundfolie F bessere Ergebnisse als Backverbundfolie C (Backpapier Hersteller 2), Backverbundfolie G zeigt bessere Ergebnisse als Backverbundfolie D (Backpapier Hersteller 3) und Backverbundfolie H zeigt bessere Ergebnisse als Backverbundfolie E (Backpapier Hersteller 4). Die Versuchsergebnisse bestätigen damit, dass das Vorsehen einer Trennwachs-Trennschicht eine zufriedenstellendere Ablösbarkeit des Backguts bewirkt, so dass die Backverbundfolien mit Trennschicht jeweils besser als Backgutunterlage geeignet sind als ihre jeweiligen Pendants ohne Trennschicht.

Die Backverbundfolien I und J mit Acrylat-Trennschicht zeigten bei der Ablösbarkeit schlechtere Ergebnisse als die Backverbundfolien mit Trennwachs-Trennschicht.

Zudem führten die Backverbundfolien I und J zu einer unangenehmen Geruchsentwicklung während des Backvorgangs.

## Patentansprüche

1. Backverbundfolie (2, 44), insbesondere hergestellt nach einem der Ansprüche 7 bis 10,
- mit einer Aluminiumfolienlage (4, 24) und
- mit einer Backpapierlage (8, 28),
- wobei die Aluminiumfolienlage (4, 24) und die Backpapierlage (8, 28) durch eine dazwischen angeordneten Kleberlage (6, 32) miteinander verklebt sind, **dadurch gekennzeichnet,**
- **dass** an der der Aluminiumfolienlage (4, 24) abgewandten Seite der Backpapierlage (8, 28) eine Trennschicht (10, 40) aus Trennwachs vorgesehen ist.

2. Backverbundfolie nach Anspruch 1,
**dadurch gekennzeichnet, dass** die Backpapierlage (8, 28) silikonfrei ist.

3. Backverbundfolie nach Anspruch 1 oder 2,
**dadurch gekennzeichnet, dass** die Trennschicht (10, 40) aus Trennwachs folgende Bestandteile umfasst, insbesondere zu mindestens 95 Gew.-% aus diesen Bestandteilen besteht: pflanzliche Öle und/oder pflanzliche Fette, Wachsester und ggf. Zusatzstoffe.

4. Backverbundfolie nach einem der Ansprüche 1 bis 3,
**dadurch gekennzeichnet, dass** die Backpapierlage (8, 28) fettabweisend ist.

5. Backverbundfolie nach einem der Ansprüche 1 bis 4,
**dadurch gekennzeichnet, dass** die Backpapierlage (8, 28) nassfest ist.

6. Backverbundfolie nach einem der Ansprüche 1 bis 5,
**dadurch gekennzeichnet, dass** die Kleberlage (6, 32) aus einem hitzebeständigen Kleber besteht, vorzugsweise aus einem wasserbasierten Emulsionsklebstoff, insbesondere aus einem Casein/Latex-Emulsionsklebstoff.

7. Verfahren zur Herstellung einer Backverbundfolie (2, 44), insbesondere einer Backverbundfolie nach einem der Ansprüche 1 bis 6,
- bei dem eine Aluminiumfolienlage (4, 24) und eine Backpapierlage (8, 28) bereitgestellt werden,
- bei dem auf die Aluminiumfolienlage (4, 24) und/oder auf die Backpapierlage (8, 28) eine Kleberlage (6, 32) aufgebracht wird,
- bei dem die Aluminiumfolienlage (4, 24) und die Backpapierlage (8, 28) mit dazwischen angeordneter Kleberlage (6, 32) zu einer Verbundfolie (36) aufeinander gelegt werden und
- bei dem die der Aluminiumfolienlage (4, 24) abgewandte Seite der Backpapierlage (8, 28) mit einer Trennschicht (10, 40) aus Trennwachs beschichtet wird.

8. Verfahren nach Anspruch 7,
**dadurch gekennzeichnet, dass** die Backpapierlage (8, 28) silikonfrei ist.

9. Verfahren nach Anspruch 7 oder 8,
bei dem die Aluminiumfolienlage (4, 24) und die Backpapierlage (8, 28) mit der dazwischen angeordneten Kleberlage (6, 32) aneinandergepresst werden.

10. Verfahren nach einem der Ansprüche 7 bis 9,
bei dem die Verbundfolie (36) getrocknet wird.

11. Verwendung einer Backverbundfolie (2, 44) nach einem der Ansprüche 1 bis 6 als Backgutunterlage bei einem Backvorgang.

## Claims

1. Baking composite film (2, 44), in particular produced according to any one of claims 7 to 10,
- with an aluminium foil layer (4, 24) and
- with a baking paper layer (8, 28),
- wherein the aluminium foil layer (4, 24) and the baking paper layer (8, 28) are adhered together by an adhesive layer (6, 32) arranged therebetween, **characterised in that**
- a separation layer (10, 40) made of release wax is provided on the side of the baking paper layer (8, 28) facing away from the aluminium film layer (4, 24).

2. Baking composite film according to claim 1, **characterised in that** the baking paper layer (8, 28) is silicone-free.

3. Baking composite film according to claim 1 or 2, **characterised in that** the separation layer (10, 40) made of release wax comprises the following constituents, in particular consists at least 95% by weight of these constituents: vegetable oils and/or vegetable fats, wax esters and, if applicable, additives.

4. Baking composite film according to any one of claims 1 to 3, **characterised in that** the baking paper layer (8, 28) is grease proof.

5. Baking composite film according to any one of claims 1 to 4, **characterised in that** the baking paper layer (8, 28) is waterproof.

6. Baking composite film according to any one of claims 1 to 5, **characterised in that** the adhesive layer (6, 32) consists of a heat-resistant adhesive, preferably of a water-based emulsion adhesive, in particular of a casein/latex emulsion adhesive.

7. Method for producing a baking composite film (2, 44), in particular a baking composite film according to any one of claims 1 to 6,
- in which an aluminium film layer (4, 24) and a baking paper layer (8, 28) are provided,
- in which an adhesive layer (6, 32) is applied to the aluminium film layer (4, 24) and/or to the baking paper layer (8, 28),
- in which the aluminium film layer (4, 24) and the baking paper layer (8, 28) are laid on top of one another with the adhesive layer (6, 32) arranged therebetween to form a composite film (36) and
- in which the side of the baking paper layer (8, 28) facing away from the aluminium film layer (4, 24) is coated with a separation layer (10, 40) made of release wax.

8. Method according to claim 7, **characterised in that** the baking paper layer (8, 28) is silicone-free.

9. Method according to claim 7 or 8, in which the aluminium film layer (4, 24) and the baking paper layer (8, 28) with the adhesive layer (6, 32) arranged therebetween are pressed together.

10. Method according to any one of claims 7 to 9, in which the composite film (36) is dried.

11. Use of a baking composite film (2, 44) according to anyone of claims 1 to 6 as a baking product base during a baking process.

## Revendications

1. Film composite de cuisson (2, 44), en particulier fabriqué selon l'une des revendications 7 à 10,
- avec une couche de film d'aluminium (4, 24), et
- avec une couche de papier de cuisson (8, 28),
- où la couche de film d'aluminium (4, 24) et la couche de papier de cuisson (8, 28) sont collées l'une à l'autre par une couche de colle (6, 32) intercalée entre ces dernières,
**caractérisé**
- **en ce que**, sur le côté de la couche de papier de cuisson (8, 28) détourné de la couche de film d'aluminium (4, 24), une couche de séparation (10, 40) constituée d'une cire de séparation est prévue.

2. Film composite de cuisson selon la revendication 1,
**caractérisé en ce que** la couche de papier de cuisson (8, 28) est exempte de silicone.

3. Film composite de cuisson selon la revendication 1ou 2,
**caractérisé en ce que** la couche de séparation (10, 40) constituée de cire de séparation comporte les composants suivants, en particulier est constituée des composants suivants au moins à hauteur de 95 % en poids : huiles végétales et/ou graisses végétales, esters de cire et le cas échéant additifs.

4. Film composite de cuisson selon l'une des revendications 1 à 3,
**caractérisé en ce que** la couche de papier de cuisson (8, 28) est oléophobe.

5. Film composite de cuisson selon l'une des revendications 1 à 4,
**caractérisé en ce que** la couche de papier de cuisson (8, 28) est résistante à l'humidité.

6. Film composite de cuisson selon l'une des revendications 1 à 5,
**caractérisé en ce que** la couche de colle (6, 32) est constituée d'un adhésif thermorésistant, de préférence d'une émulsion adhésive aqueuse, en particulier d'une émulsion adhésive en caséine/latex.

7. Procédé de fabrication d'un film composite de cuisson (2, 44), en particulier d'un film composite de cuisson selon l'une des revendications 1 à 6,
- dans lequel une couche de film d'aluminium (4, 24) et une couche de papier de cuisson (8, 28) sont mises à disposition,
- dans lequel une couche de colle (6, 32) est appliquée sur la couche de film d'aluminium (4, 24) et/ou sur la couche de papier de cuisson (8, 28),
- dans lequel la couche de film d'aluminium (4, 24) et la couche de papier de cuisson (8, 28), avec une couche de colle (6, 32) intercalée entre ces dernières, sont placées l'une sur l'autre pour former un film composite (36) et
- dans lequel le côté de la couche de papier de cuisson (8, 28) détourné de la couche de film d'aluminium (4, 24) est revêtu d'une couche de séparation (10, 40) constituée d'une cire de séparation.

8. Procédé selon la revendication 7,
**caractérisé en ce que** la couche de papier de cuisson (8, 28) est exempte de silicone.

9. Procédé selon l'une des revendications 7 à 8,
dans lequel la couche de film d'aluminium (4, 24) et la couche de papier de cuisson (8, 28) sont pressées l'une contre l'autre avec la couche de colle (6, 32) intercalée entre ces dernières.

10. Procédé selon l'une des revendications 7 à 9,
dans lequel le film composite (36) est séché.

11. Utilisation d'un film composite de cuisson (2, 44) selon l'une des revendications 1 à 6 en tant que support de produit à cuire lors d'un processus de cuisson.
